# EUROPEAN PATENT APPLICATION

(11) **EP 4 626 099 A1**
(43) Date of publication of application: **01.10.2025**
(21) Application number: 22966289.5
(22) Date of filing: 25.11.2022
(51) Int. Cl.: H04W 72/02

(54) **CONFIGURATION DETERMINATION METHOD AND APPARATUS, AND COMMUNICATION APPARATUS AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Dehns Germany Partnerschaft mbB
(86) International application number: PCT/CN2022/134514
(87) International publication number: WO 2024/108602

(57) **Abstract**

The present disclosure relates to the technical field of communications, and in particular to a configuration determination method and apparatus, and a communication apparatus and a storage medium. The configuration determination method comprises: in response to receiving a first configuration of a first service, determining a reference configuration according to a stored configuration of a second service, wherein the reference configuration is used for a terminal to determine a second configuration of the first service according to the first configuration and the reference configuration. In the present disclosure, a terminal can determine a reference configuration according to a stored configuration of a second service, and can then determine a second configuration in combination with the reference configuration and a first configuration, thereby ensuring that the communication of a first service is smoothly performed by using the second configuration.

## Description

### TECHNICAL FIELD

The present disclosure relates to the communication technical field, and in particular, to a configuration determination method, a configuration determination apparatus, a communication apparatus, and a computer-readable storage medium.

### BACKGROUND

A network device may provide a terminal with a configuration of a communication service, and the terminal may perform the communication service based on the configuration. Due to the diversity of the method for providing the configuration by the network device to the terminal, some technical problem(s) exists(exist) in the procedure of the terminal determining the service configuration.

### SUMMARY

Embodiments of the present disclosure propose a configuration determination method, a configuration determination apparatus, a communication apparatus, and a computer-readable storage medium to solve technical problem(s) in related art.

According to a first aspect of an embodiment of the present disclosure, a configuration determination method is proposed. The method is performed by a terminal. The method includes: in response to receiving a first configuration of a first service, determining a reference configuration according to a stored configuration of a second service; wherein the reference configuration is used by the terminal to determine a second configuration of the first service according to the first configuration and the reference configuration.

According to a second aspect of an embodiment of the present disclosure, a configuration determination method is proposed. The method is performed by a network device. The method includes: sending a first configuration of a first service to a terminal; and determining a reference configuration according to a configuration of a second service stored in the terminal.

According to a third aspect of an embodiment of the present disclosure, a configuration determination apparatus is proposed. The apparatus include: a processing module configured to, in response to receiving a first configuration of a first service, determine a reference configuration according to a stored configuration of a second service; wherein the reference configuration is used by the terminal to determine a second configuration of the first service according to the first configuration and the reference configuration.

According to a fourth aspect of an embodiment of the present disclosure, a configuration determination apparatus is proposed. The apparatus includes: a sending module configured to send a first configuration of a first service to a terminal; and a processing module configured to determine a reference configuration according to a configuration of a second service stored in the terminal; wherein the reference configuration is used by the terminal to determine a second configuration of the first service according to the first configuration and the reference configuration.

According to a fifth aspect of an embodiment of the present disclosure, a configuration determination system is proposed. The system includes a terminal and a network device. The terminal is configured to implement the above-described configuration determination method performed by the terminal, and the network device is configured to implement the above-described configuration determination method performed by the network device.

According to a sixth aspect of an embodiment of the present disclosure, a communication apparatus is proposed. The apparatus includes: a processor; and a memory configured to store a computer program. When the computer program is executed by the processor, the above-described configuration determination method performed by the terminal is implemented.

According to a seventh aspect of an embodiment of the present disclosure, a communication apparatus is proposed. The apparatus includes: a processor; and a memory configured to store a computer program. When the computer program is executed by the processor, the above-described configuration determination method performed by the network device is implemented.

According to an eighth aspect of an embodiment of the present disclosure, a computer-readable storage medium is proposed for storing a computer program. When the computer program is executed by a processor, the above-described configuration determination method performed by the terminal is implemented.

According to a ninth aspect of an embodiment of the present disclosure, a computer-readable storage medium is proposed for storing a computer program. When the computer program is executed by a processor, the above-described configuration determination method performed by the network device is implemented.

According to the embodiments of the present disclosure, the terminal can determine the reference configuration according to the stored configuration of the second service, and further determine the second configuration in combination with the reference configuration and the first configuration, thereby ensuring smooth communication of the first service using the second configuration.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those of ordinary skill in this art, other drawings can be obtained based on these drawings without creative work.
FIG. 1 is a schematic flowchart of a configuration determination method according to an embodiment of the present disclosure.
FIG. 2 is a schematic flowchart of another configuration determination method according to an embodiment of the present disclosure.
FIG. 3 is a schematic flowchart of yet another configuration determination method according to an embodiment of the present disclosure.
FIG. 4 is a schematic flowchart of yet another configuration determination method according to an embodiment of the present disclosure.
FIG. 5 is a schematic flowchart of a configuration determination method according to an embodiment of the present disclosure.
FIG. 6A is a schematic flowchart of a configuration determination method according to an embodiment of the present disclosure.
FIG. 6B is a schematic flowchart of another configuration determination method according to an embodiment of the present disclosure.
FIG. 7 is a schematic flowchart of yet another configuration determination method according to an embodiment of the present disclosure.
FIG. 8 is a schematic flowchart of yet another configuration determination method according to an embodiment of the present disclosure.
FIG. 9 is a schematic block diagram of a configuration determination apparatus according to an embodiment of the present disclosure.
FIG. 10 is a schematic block diagram of a configuration determination apparatus according to an embodiment of the present disclosure.
FIG. 11 is a schematic block diagram of an apparatus for configuration determination according to an embodiment of the present disclosure.
FIG. 12 is a schematic block diagram of an apparatus for configuration determination according to an embodiment of the present disclosure.

### DETAILED DESCRIPTION

The following will clearly and completely describe the technical solutions in the embodiments of the present disclosure in combination with the drawings in the embodiments of the present disclosure to. Obviously, the described embodiments are only a part of the embodiments of the present disclosure, not all of the embodiments. Based on the embodiments in the present disclosure, all other embodiments obtained by those of ordinary skill in this art without making creative work fall within the scope of protection of the present disclosure.

The terms used in the embodiments of the present disclosure are only for the purpose of describing example embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, the information should not be limited to these terms. These terms are only used to distinguish the same type of information from each other. For example, without departing from the scope of the embodiments of the present disclosure, first information may also be referred to as second information, and similarly, the second information may also be referred to as the first information. Depending on the context, the word "if" as used herein may be interpreted as "when" or "in a case where" or "in response to determining...".

For the purpose of brevity and ease of understanding, the terms used herein to characterize size relationships are "greater than" or "less than", "higher than" or "lower than". However, it is understood by those skilled in the art that the term "greater than" also covers the meaning of "greater than or equal to", and "less than" also covers the meaning of "less than or equal to", the term "higher than" covers the meaning of "higher than or equal to", and "lower than" also covers the meaning of "lower than or equal to".

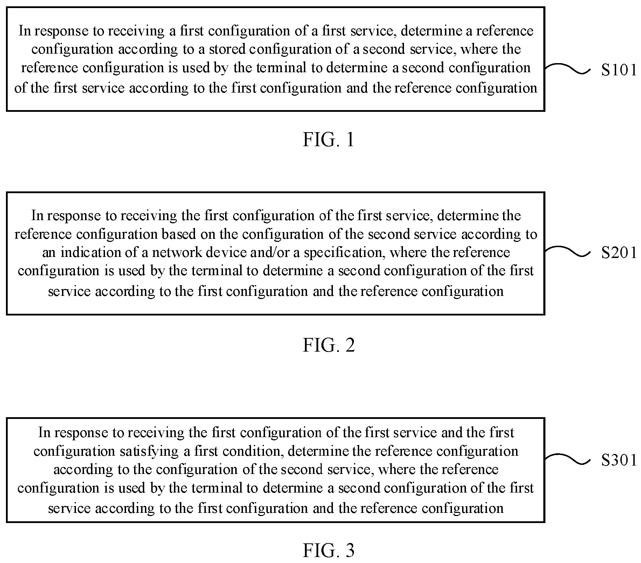

FIG. 1 is a schematic flowchart of a configuration determination method according to an embodiment of the present disclosure. The configuration determination method shown in this embodiment may be performed by a terminal. The terminal includes but is not limited to a communication apparatus such as a mobile phone, a tablet computer, a wearable device, a sensor, an Internet of Things device, etc. The terminal may communicate with a network device, and the network device includes but is not limited to a network device in a communication system such as a 4G, 5G, 6G, etc. communication system, for example the network device may be a base station, a core network, etc.

As shown in FIG. 1, the configuration determination method may include the following step:
In step S101, in response to receiving a first configuration of a first service, a reference configuration is determined according to a stored configuration of a second service. The reference configuration is used by the terminal to determine a second configuration of the first service according to the first configuration and the reference configuration.

In an embodiment, the first configuration of the first service sent by the network device to the terminal may include a partial configuration of a communication configuration used when the terminal performs the first service with the network device. For example, the terminal needs to use the second configuration to perform a communication of the first service, and the first configuration of the first service sent by the network device is different from the second configuration. For example, the first configuration lacks one or more configuration parameters compared to the second configuration. Based on this, it is helpful to save the overhead for the network device to send the configuration to the terminal. Accordingly, the terminal needs to determine the second configuration based on that the first configuration is received to perform the communication of the first service. In an example, the second configuration may include a full configuration used when the terminal performs the first service with the network device, or the second configuration may alternatively include a partial configuration used when the terminal performs the first service with the network device.

According to the embodiment of the present disclosure, the terminal can determine the reference configuration according to the stored configuration of the second service, and further determine the second configuration in combination with the reference configuration and the first configuration, thereby ensuring smooth communication of the first service using the second configuration.

It should be noted that the method for determining the reference configuration includes but is not limited to determining the reference configuration according to the stored configuration of the second service, and may also be determined by other method(s). For example, the reference configuration may be determined in a configuration determined autonomously by the terminal, or the terminal determines the reference configuration based on a protocol or a predefined rule.

FIG. 2 is a schematic flowchart of another configuration determination method according to an embodiment of the present disclosure. As shown in FIG. 2, determining the reference configuration according to the stored configuration of the second service in response to receiving the first configuration of the first service includes:
In step S201, in response to receiving the first configuration of the first service, the reference configuration is determined based on the configuration of the second service according to an indication of the network device and/or a specification.

It should be noted that the embodiment shown in FIG. 2 may be implemented independently, or may be implemented in combination with one or more embodiments of other embodiments of the present disclosure, and the present disclosure does not limit the specific implementation.

In an embodiment, the terminal may determine to determine the reference configuration according to the configuration of the second service based on the indication of the network device only. For example, the network device may indicate the terminal to determine a target service as the second service among multiple services, and indicate to the terminal that a target configuration in the configuration of the second service is the second configuration.

In an embodiment, the terminal may determine the reference configuration according to the configuration of the second service based on a specification only. For example, the terminal may determine a target service as the second service among multiple services according to the specification, and determine a target configuration in the configuration of the second service as the second configuration according to the specification.

In an embodiment, the terminal may determine the reference configuration according to the configuration of the second service based on the indication of the network device and the specification. For example, the terminal may determine a target service as the second service among multiple services according to the indication of the network device, and further determine a target configuration in the configuration as the second configuration according to the specification, and accordingly based on the determined second service, the target configuration in the configuration of the second service may be determined to be the second configuration. For example, the terminal may determine a target service as the second service among multiple services according to the specification, and further determine a target configuration in the configuration as the second configuration according to the indication of the network device, and accordingly based on the determined second service, the target configuration in the configuration of the second service may be determined to be the second configuration.

In an embodiment, the network device may indicate information such as identity, status, type of a service, etc., and the terminal may determine the target service among multiple services based on the information such as identity, status, type of the service, etc., indicated by the network device. For example, among multiple services, a service whose type is the same as the type indicated by the network device is determined as the target service. The network device may indicate information such as the identity, status, parameter of a configuration, etc., and the terminal may determine the target configuration in the configuration of the second service according to the information such as the identity, status, parameter of the service, etc., indicated by the network device. For example, in the configuration(s) of the second service, a configuration containing a parameter that is the same as the parameter indicated by the network device is determined as the target configuration.

In an embodiment, the protocol may stipulate information such as identity, status, type of a service, etc., and the terminal may determine the target service among multiple services based on the information such as the identity, status, type of the service, etc., stipulated in the protocol. For example, among multiple services, a service whose type is the same as the type stipulated in the protocol may be determined as the target service. The protocol may stipulate information such as identity, status, parameter of a configuration, etc., and the terminal may determine the target configuration in the configuration of the second service based on the information such as the identity, status, parameter of the service, etc., stipulated in the protocol. For example, in the configuration(s) of the second service, a configuration containing a parameter that is the same as the parameter stipulated in the protocol may be determined as the target configuration.

In an embodiment, the manner in which the network device indicates the terminal includes, but is not limited to, at least one of: indicating through indication signaling; or indicating through a broadcast message.

The indication signaling includes but is not limited to Radio Resource Control (RRC) layer signaling, physical layer signaling (such as Downlink Control Information, DCI), media access control layer signaling (such as media access and control layer control element, MAC CE).

The broadcast message includes but is not limited to a System Information Block (SIB), a multicast service control channel (MBS Control Channel, MCCH), a paging message, etc.

FIG. 3 is a schematic flowchart of another configuration determination method according to an embodiment of the present disclosure. As shown in FIG. 3, determining the reference configuration according to the stored configuration of the second service in response to receiving the first configuration of the first service includes:
In step S301, in response to receiving the first configuration of the first service and the first configuration satisfying a first condition, the reference configuration is determined according to the configuration of the second service.

It should be noted that the embodiment shown in FIG. 3 may be implemented independently, or may be implemented in combination with one or more embodiments of other embodiments of the present disclosure. The present disclosure does not limit the specific implementation.

In an embodiment, after the terminal receives the first configuration of the first service, the terminal may first determine whether the first configuration satisfies the first condition, and the terminal determines the reference configuration according to the configuration of the second service only if the first condition is satisfied; otherwise, there is no need to determine the reference configuration according to the configuration of the second service. For example, when the first configuration does not satisfy the first condition, the first configuration may be directly used for communication of the first service.

The first condition is illustratively described below through several embodiments.

In an embodiment, the first condition includes at least one of:
a first indication being received, wherein the first indication is used to indicate that the first configuration is configured to the terminal in an incremental configuration manner; or
when a first configuration parameter is absent in the first configuration.

In an embodiment, the first condition may be that the first indication is received. The first indication is used to indicate that the first configuration is configured to the terminal in an incremental configuration manner. When the terminal determines that the first configuration is configured in the incremental configuration manner, the terminal may determine the reference configuration according to the stored configuration of the second service.

When the first configuration is configured to the terminal in the incremental configuration manner, the first configuration lacks field(s) corresponding to one or more configuration parameters relative to a full configuration.

For example, the full configuration contains 4 configuration parameters, the first configuration contains 3 configuration parameters, and a field corresponding to the third parameter is absent compared to the full configuration. For example, among the 4 configuration parameters, the first configuration parameter corresponds to a field A, the second parameter corresponds to a field B, the third parameter corresponds to a field C, and the fourth parameter corresponds to a field D. The full configuration contains fields ABCD, and the first configuration contains fields ABD.

The network device may indicate to the terminal through the first indication whether the first configuration is configured to the terminal in the incremental configuration manner, for example, by indicating in an explicit manner or in an implicit manner, which is not limited by the present disclosure. In addition, whether the first configuration is configured to the terminal in the incremental configuration manner may also be determined based on a specification.

In an embodiment, the first condition may be that a part of configuration parameter(s) in the first configuration is(are) absent, wherein the first configuration parameter is not included in the first configuration, or a value of the first configuration parameter in the first configuration is a preset value. When the terminal determines that the first configuration has a first configuration parameter that is absent, the terminal may determine the reference configuration according to the stored configuration of the second service.

The first configuration having a first configuration parameter that is absent may include a case where the first configuration is configured to the terminal in an incremental configuration manner, that is, the first configuration lacks field(s) corresponding to one or more configuration parameters relative to a full configuration. Alternatively, the first configuration having a first configuration parameter that is absent means that: bit(s) in field(s) corresponding to one or more configuration parameters is(are) set to a preset value (for example, all the bit(s) is(are) set to 1 or all the bit(s) is(are) to 0) in the first configuration relative to the full configuration, and in this case the one or more configuration parameters are absent.

For example, the full configuration includes 4 configuration parameters, the first configuration includes 3 configuration parameters, and the first configuration lacks the third parameter relative to the full configuration. For example, among the 4 configuration parameters, the first configuration parameter corresponds to a field A, the second parameter corresponds to a field B, the third parameter corresponds to a field C, and the fourth parameter corresponds to a field D. The full configuration includes fields ABCD, and the first configuration also includes fields ABCD, but in the fields ABCD included in the first configuration, the bit in the field C is set to a preset value.

The terminal may determine whether a part of configuration parameter(s) in the first configuration is(are) absent based on a value of a bit in each field in the first configuration. For example, if bit(s) in the field(s) corresponding to one or more configuration parameters in the first configuration is(are) set to a preset value, it can be determined that the one or more configuration parameters are absent.

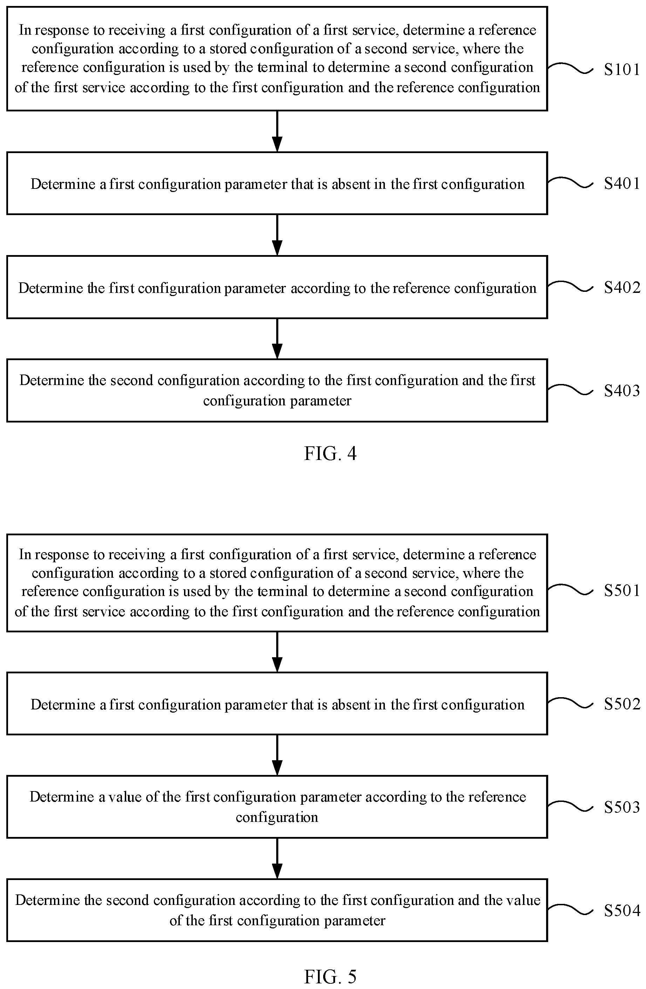

FIG. 4 is a schematic flowchart of another configuration determination method according to an embodiment of the present disclosure. As shown in FIG. 4, the method further includes:
In step S401, a first configuration parameter that is absent in the first configuration is determined.
In step S402, the first configuration parameter is determined according to the reference configuration.
In step S403, the second configuration is determined according to the first configuration and the first configuration parameter.

It should be noted that the embodiment shown in FIG. 4 may be implemented independently, or may be implemented in combination with one or more embodiments of other embodiments of the present disclosure. The present disclosure does not limit the specific implementation.

In an embodiment, when the terminal determines that the first configuration satisfies the first condition, the terminal may determine the first configuration parameter that is absent in the first configuration, then determine the first configuration parameter according to the reference configuration, and then determine the second configuration according to the first configuration and the first configuration parameter.

The full configuration including 4 configuration parameters is still used as an example.

In a case where the terminal determines that the first configuration is configured in the incremental configuration manner, for example, the first configuration includes fields ABD and the first configuration lacks the field C relative to the full configuration, it may be determined that the first configuration parameter that is absent in the first configuration is the configuration parameter corresponding to the field C. Accordingly, the configuration parameter corresponding to the field C in the reference configuration may be determined as a part of parameter(s) that is(are) absent in the first configuration, and further the second configuration may be determined according to the first configuration and the configuration parameter corresponding to the field C determined in the reference configuration.

In a case where the terminal determines that a part of configuration parameter(s) is(are) absent in the first configuration, for example, the first configuration includes fields ABCD and the bit in the field C is set to a preset value, it can be determined that the first configuration parameter that is absent from the first configuration is the configuration parameter corresponding to the field C. Accordingly, the configuration parameter corresponding to the field C determined in the reference configuration may be determined as the partial parameter that is absent from the first configuration, and further the second configuration may be determined based on the first configuration and the configuration parameter corresponding to the field C determined in the reference configuration.

In an embodiment, the first service is a first multicast service, and/or the second service is a second multicast service.

The first service may be a first multicast service, and the second service may be a second multicast service. The first multicast service and the second multicast service may be the same multicast service, or may be different multicast services.

Multicast services mainly include two types: a multicast service for an inactive state and a multicast service for a connected state. The multicast service for the inactive state is a multicast service that supports a terminal in the inactive state to perform multicast service reception, and the multicast service for the connected state is a multicast service that supports a terminal in the connected state to perform multicast service reception. Based on these two types, the first multicast service and the second multicast service are illustratively described below.

In an embodiment, the first multicast service is a multicast service for the inactive state, and the second multicast service is a multicast service for the connected state. A first configuration of the first multicast service may be a multicast service configuration for the inactive state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. A configuration of the second multicast service may be a multicast service configuration for the connected state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH.

Alternatively, the first multicast service is a first multicast service for the inactive state, and the second multicast service is a second multicast service for the inactive state. A first configuration of the first multicast service may be a multicast service configuration for the inactive state sent through at least one of: at least one piece of signaling (for example, RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH. A configuration of the second multicast service may be a multicast service configuration for the inactive state sent through at least one of: at least one piece of signaling (for example, RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH.

Alternatively, the first multicast service is a multicast service for the connected state, and the second multicast service is a multicast service for the inactive state. A first configuration of the first multicast service may be a multicast service configuration for the connected state sent through at least one of: at least one piece of signaling (for example, RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH. A configuration of the second multicast service may be a multicast service configuration for the inactive state sent through at least one of: at least one piece of signaling (for example, RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH.

Alternatively, the first multicast service is a first multicast service for the connected state, and the second multicast service is a second multicast service for the connected state. A first configuration of the first multicast service may be a multicast service configuration for the connected stated sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. A configuration of the second multicast service may be a multicast service configuration for the connected state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH.

In an embodiment, in a case where the first multicast service is a multicast service for the inactive state and the second multicast service is a multicast service for the connected state, when the terminal receives the first configuration of the first multicast service, since the terminal has stored the configuration of the second multicast service, the terminal can determine the reference configuration according to the configuration of the second multicast service based on an indication of the network device and/or a specification.

For example, when the terminal is in the connected state, the terminal has received the configuration of the second multicast service through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and stored the configuration of the second multicast service. Alternatively, when the terminal is in the inactive state, the terminal has received the configuration of the second multicast service through at least one of: a SIB or MCCH, and stored the configuration of the second multicast service. Subsequently, when the first configuration of the first multicast service is received through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, the reference configuration may be determined according to the configuration of the second multicast service based on an indication of the network device and/or a specification. For example, when the terminal is in the inactive state, the terminal may receive the first configuration of the first multicast service through at least one of: a SIB, or MCCH.

In an embodiment, in a case where the first multicast service is a first multicast service for the inactive state and the second multicast service is a second multicast service for the inactive state, when the terminal receives the first configuration of the first multicast service, since the terminal has stored the configuration of the second multicast service, the terminal may determine the reference configuration according to the configuration of the second multicast service based on an indication of the network device and/or a specification.

For example, when the terminal is in a connected state, the terminal has received the configuration of the second multicast service through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and stored the configuration of the second multicast service. Subsequently, when the first configuration of the first multicast service is received through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, the reference configuration may be determined according to the configuration of the second multicast service based on an indication of the network device and/or a specification. For example, when the terminal enters the connected state from the inactive state, the terminal may receive the first configuration of the first multicast service through at least one piece of signaling (e.g., RRCResume signaling) in response to a radio resource control resume RRCResume request.

In an embodiment, in a case where the first multicast service is a multicast service for the connected state and the second multicast service is a multicast service for the inactive state, when the terminal receives the first configuration of the first multicast service, since the terminal has stored the configuration of the second multicast service, the terminal may determine the reference configuration according to the configuration of the second multicast service based on the indication of the network device and/or a specification.

For example, when the terminal is in a connected state, the terminal has received the configuration of the second multicast service through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and stored the configuration of the second multicast service. Subsequently, when the first configuration of the first multicast service is received through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, the reference configuration may be determined according to the configuration of the second multicast service based on an indication of the network device and/or a specification. For example, when the terminal enters the connected state from the inactive state, the terminal may receive the first configuration of the first multicast service thorugh at least one piece of signaling (e.g., RRCResume signaling) in response to a radio resource control resume RRCResume request.

In an embodiment, in a case where the first multicast service is a multicast service for the connected state and the second multicast service is a multicast service for the connected state, when the terminal receives the first configuration of the first multicast service, since the terminal has stored the configuration of the second multicast service, the terminal may determine the reference configuration according to the configuration of the second multicast service based on an indication of the network device and/or a specification.

For example, when the terminal is in the connected state, the terminal has received the configuration of the second multicast service through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and the terminal has stored the configuration of the second multicast service. Alternatively, when the terminal is in the inactive state, the terminal has received the configuration of the second multicast service through at least one of: a SIB, or MCCH, and the terminal has stored the configuration of the second multicast service. Subsequently, when the first configuration of the first multicast service is received through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, the reference configuration may be determined according to the configuration of the second multicast service based on an indication of the network device and/or a specification. For example, when the terminal is in the connected state, the terminal may receive the first configuration of the first multicast service through at least one of: at least one piece of signaling (e.g., RRCResume signaling) in response to a radio resource control resume RRCResume request, radio resource control reconfiguration RRCReconfiguration signaling, the radio resource control release RRCRelease signaling (e.g., RRCRelease signaling carrying a suspended configuration), a SIB, or MCCH.

It should be noted that the embodiments involving the inactive state in the present disclosure may also be expanded to an idle state as needed. For example, an embodiment applicable to the multicast service for the inactive state may also be expanded to be applicable to an implementation of a multicast service for the idle state.

In an embodiment, at least one of a configuration of the multicast service for the inactive state, a configuration of the first multicast service for the inactive state, or a configuration of the second multicast service for the inactive state is carried in at least one of the following information: dedicated signaling; or a broadcast message.

The dedicated signaling includes at least one of:
radio resource control reconfiguration (RRCReconfiguration) signaling; at least one piece of signaling in response to a radio resource control resume (RRCResume) request, such as RRCResume signaling; or radio resource control release (RRCRelease) signaling, such as RRCRelease signaling carrying a suspend configuration.

The broadcast message includes at least one of: a system information block, a multicast service control channel, or a paging message, etc.

In an embodiment, the first configuration of the first multicast service and the configuration of the second multicast service are carried in the same message.

For example, the first configuration of the first multicast service is carried in a first configuration message, and the configuration of the second multicast service is carried in the first configuration message received last time. In this case, if the first configuration of the first multicast service satisfies the first condition, the terminal determines the reference configuration by default in a configuration carried in the first configuration message received last time.

In an embodiment, the first configuration of the first multicast service and the configuration of the second multicast service are carried in different messages.

For example, the first configuration of the first multicast service is carried in a first configuration message, and the configuration of the second multicast service is carried in a second configuration message. The first configuration message is different from the second configuration message. For example, the first and second configuration messages are of different types. For example, the first configuration message is RRCrelease signaling carrying a suspend configuration, and the second configuration message is RRCReconfiguration. In this case, the terminal does not determine the reference configuration by default in a configuration carried by the first configuration message received last time. In this embodiment, the reference configuration may be determined according to the configuration of the second multicast service based on an indication of the network device or a specification, thereby ensuring that the terminal smoothly determines the reference configuration.

In an embodiment, the configuration of the second multicast service includes at least one of:
a multicast service configuration associated with a first BandWidth Part (BWP), for example, a Common Frequency Resource (CFR) configuration;
a multicast service configuration associated with a first cell; in an example, the first cell is a cell supporting and/or used for performing a multicast service;
a multicast service configuration associated with a first bandwidth part in a first cell; or
a multicast service configuration associated with a first bandwidth part in a first cell group; in an example, the first cell group is a cell group supporting and/or used for performing a multicast service.

In an embodiment, after the terminal receives the first configuration of the first service, the terminal may determine the reference configuration according to the stored multicast service configuration associated with the first BWP based on an indication of the network device and/or a specification.

In an embodiment, after the terminal receives the first configuration of the first service, the terminal may determine the reference configuration according to the stored multicast service configuration associated with the first cell based on an indication of the network device and/or a specification.

In an embodiment, after the terminal receives the first configuration of the first service, the terminal may determine the reference configuration according to the stored multicast service configuration associated with the first bandwidth part in the first cell based on an indication of the network device and/or a specification.

In an embodiment, after the terminal receives the first configuration of the first service, the terminal may determine the reference configuration according to the stored multicast service configuration associated with the first bandwidth part in the first cell group based on an indication of the network device and/or a specification.

In an embodiment, the first bandwidth part includes at least one of:
an initial bandwidth part;
a currently camped-on bandwidth part, for example, a BWP which the terminal camps on when the first configuration of the first service is received; or
any bandwidth part configured by the network device.

In an embodiment, after the terminal receives the first configuration of the first service, the terminal may determine the reference configuration according to the stored multicast service configuration associated with the initial BWP based on an indication of the network device and/or a specification.

In an embodiment, after the terminal receives the first configuration of the first service, the terminal may determine the reference configuration according to the stored multicast service configuration associated with the currently camped-on BWP based on an indication of the network device and/or a specification.

In an embodiment, after the terminal receives the first configuration of the first service, the terminal may determine the reference configuration according to the stored multicast service configuration associated with any BWP configured by the network device based on an indication of the network device and/or a specification.

In an embodiment, the cell includes at least one of:
a cell that belongs to the same service area as the currently camped-on cell;
a cell that belongs to the same service configuration area as the currently camped-on cell;
the currently camped-on cell; or
any cell configured by the network device.

In an embodiment, after the terminal receives the first configuration of the first service, the terminal may determine, based on an indication of the network device and/or a specification, the reference configuration according to the stored multicast service configuration associated with the cell that belongs to the same service area as the currently camped-on cell.

In an embodiment, after the terminal receives the first configuration of the first service, the terminal may determine the reference configuration according to the stored multicast service configuration associated with the cell that belongs to the same service configuration area as the currently camped-on cell based on an indication of the network device and/or a specification.

In an embodiment, after the terminal receives the first configuration of the first service, the terminal may determine the reference configuration according to the stored multicast service configuration associated with the currently camped-on cell based on an indication of the network device and/or a specification.

In an embodiment, after the terminal receives the first configuration of the first service, the terminal may determine the reference configuration according to the stored multicast service configuration associated with any cell configured by the network device based on an indication of the network device and/or a specification.

In an embodiment, after the terminal receives the first configuration of the first service, the terminal may determine the reference configuration according to the stored multicast service configuration associated with the first bandwidth part in the cell that belongs to the same service area as the currently camped-on cell based on an indication of the network device and/or a specification.

In an embodiment, after the terminal receives the first configuration of the first service, the terminal may determine the reference configuration according to the stored multicast service configuration associated with the first bandwidth part in the cell that belongs to the same service configuration area as the currently camped-on cell based on an indication of the network device and/or a specification.

In an embodiment, after the terminal receives the first configuration of the first service, the terminal may determine the reference configuration according to the stored multicast service configuration associated with the first bandwidth part in the currently camped-on cell based on an indication of the network device and/or a specification.

In an embodiment, after the terminal receives the first configuration of the first service, the terminal may determine the reference configuration according to the stored multicast service configuration associated with the first bandwidth part in any cell configured by the network device based on an indication of the network device and/or a specification.

In an embodiment, the cell group includes at least one of:
a cell group that belongs to the same service area as a cell group to which the currently camped-on cell belongs;
a cell group that belongs to the same service configuration area as the cell group to which the currently camped-on cell belongs;
the cell group to which the currently camped-on cell belongs; or
any cell group configured by the network device.

In an embodiment, after the terminal receives the first configuration of the first service, the terminal may, based on an indication of the network device and/or a specification, determine the reference configuration according to the stored multicast service configuration associated with the first bandwidth part in the cell group belonging to the same service area as the cell group to which the currently camped-on cell belongs.

In an embodiment, after the terminal receives the first configuration of the first service, the terminal may, based on an indication of the network device and/or a specification, determine the reference configuration according to the stored multicast service configuration associated with the first bandwidth part in the cell group belonging to the same service configuration area as the cell group to which the currently camped-on cell belongs.

In an embodiment, after the terminal receives the first configuration of the first service, the terminal may, based on an indication of the network device and/or a specification, determine the reference configuration according to the stored multicast service configuration associated with the first bandwidth part in the cell group to which the currently camped-on cell belongs.

In an embodiment, after the terminal receives the first configuration of the first service, the terminal may, based on an indication of the network device and/or a specification, determine the reference configuration according to the stored multicast service configuration associated with the first bandwidth part in any cell group configured by the network device.

FIG. 5 is a schematic flowchart of yet another configuration determination method according to an embodiment of the present disclosure.

As shown in FIG. 5, the configuration determination method includes:
In step S501, in response to receiving the first configuration of the first service, the reference configuration is determined according to the stored configuration of the second service. The reference configuration is used by the terminal to determine the second configuration of the first service according to the first configuration and the reference configuration.

Further, in an embodiment, the configuration determination method may include:
In step S502, a first configuration parameter that is absent in the first configuration is determined.
In step S503, a value of the first configuration parameter is determined according to the reference configuration.
In step S504, the second configuration is determined according to the first configuration and the value of the first configuration parameter.

In an embodiment, the terminal may determine the reference configuration based on the configuration of the second service according to an indication of the network device and/or a specification.

In an embodiment, the terminal may determine the reference configuration according to the configuration of the second service in a case where the first configuration satisfies the first condition.

For example, the first condition may be that a first indication is received. The first indication is used to indicate that the first configuration is configured to the terminal in an incremental configuration manner; or, the first condition may be when there is a first configuration parameter that is absent in the first configuration.

In an embodiment, the first service is a first multicast service, and/or the second service is a second multicast service.

Specifically, for example, the first multicast service is a multicast service for the inactive state, and the second multicast service is a multicast service for the connected state; or, for example, the first multicast service is a first multicast service for the inactive state, and the second multicast service is a second multicast service for the inactive state; or, for example, the first multicast service is a multicast service for the connected state, and the second multicast service is a multicast service for the inactive state; or, for example, the first multicast service is a first multicast service for the connected state, and the second multicast service is a second multicast service for the connected state.

In an embodiment, at least one of the configurations of the above-mentioned multicast services, for example, at least one of the configuration of the multicast service for the inactive state, the configuration of the first multicast service for the inactive state, the configuration of the second multicast service for the inactive state, and so on, may be carried in dedicated signaling and sent to the terminal, or may be carried in a broadcast message and sent to the terminal.

In an embodiment, after the terminal receives the first configuration of the first service, the terminal may determine whether the first configuration of the first multicast service and the configuration of the second multicast service are carried in different messages. If they are carried in different messages, the reference configuration may be determined according to the stored configuration of the second service.

In an embodiment, the configuration of the second multicast service includes at least one of:
a multicast service configuration associated with a first bandwidth part;
a multicast service configuration associated with a first cell;
a multicast service configuration associated with a first bandwidth part in a first cell; or
a multicast service configuration associated with a first bandwidth part in a first cell group.

The first bandwidth part involved in the configuration of the second multicast service may include at least one of: an initial bandwidth part; a currently camped-on bandwidth part; or any bandwidth part configured by the network device.

The cell involved in the configuration of the second multicast service may include at least one of: a cell belonging to the same service area as the currently camped-on cell; a cell belonging to the same service configuration area as the currently camped-on cell; the currently camped-on cell; or any cell configured by the network device.

The cell group involved in the configuration of the second multicast service may include at least one of: a cell group belonging to the same service area as the cell group to which the currently camped-on cell belongs; a cell group belonging to the same service configuration area as the cell group to which the currently camped-on cell belongs; the cell group to which the currently camped-on cell belongs; or any cell group configured by the network device.

Then, the terminal may perform transmission of data of the first service with the network device based on the determined second configuration.

In some embodiments, the network device may determine the second configuration of the first service based on the first configuration of the first service and the reference configuration, and the network device performs transmission of data of the first service with the terminal based on the second configuration of the first service determined by the network device itself. The specific method by which the network device determines the second configuration of the first service based on the first configuration of the first service and the reference configuration may be the same as or different from that of the terminal. It is understandable that the second configuration of the first service determined by the network device is the same as the second configuration of the first service determined by the terminal.

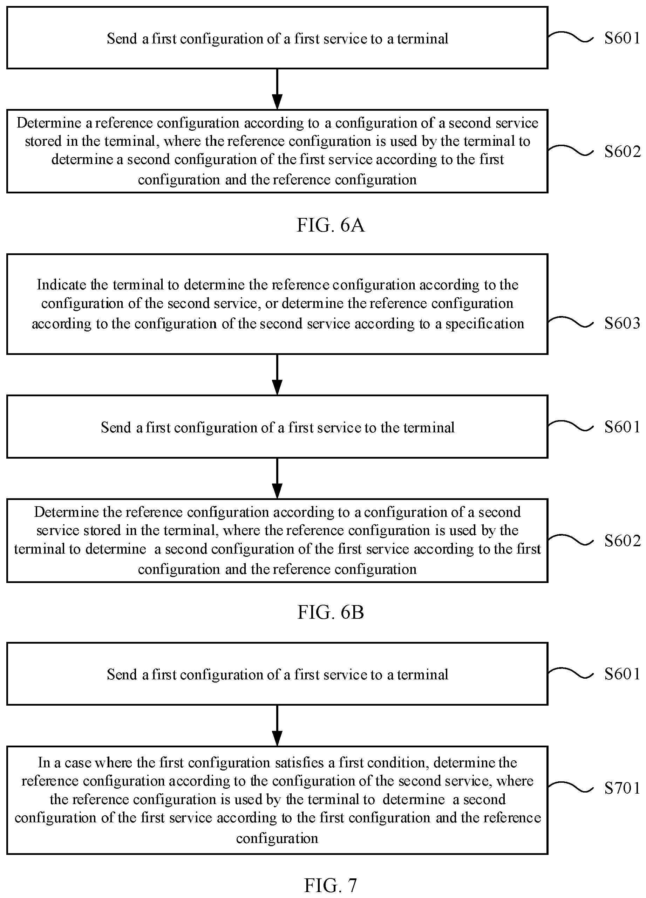

FIG. 6A is a schematic flowchart of a configuration determination method according to an embodiment of the present disclosure. The configuration determination method shown in this embodiment may be performed by a network device. The network device may communicate with a terminal, the network device includes but is not limited to a base station in a communication system, for example, a 4G base station, a 5G base station, or a 6G base station, and the terminal includes but is not limited to a communication device such as a mobile phone, a tablet computer, a wearable device, a sensor, or an Internet of Things device.

As shown in FIG. 6A, the configuration determination method may include the following steps:
In step S601, a first configuration of a first service is sent to a terminal.
In step S602, a reference configuration is determined according to a configuration of a second service stored in the terminal. The reference configuration is used by the terminal to determine the second configuration of the first service according to the first configuration and the reference configuration.

It should be noted that, in the embodiment shown in FIG. 6A, step S602 may be performed by the network device based on implementation selection. That is, after the network device sends the first configuration of the first service to the terminal, the network device may determine the reference configuration according to the configuration of the second service stored in the terminal, or may not determine the reference configuration according to the configuration of the second service stored in the terminal. The following embodiments mainly describe a case where the network device determines the reference configuration according to the configuration of the second service stored in the terminal.

In an embodiment, the network device sends the first configuration of the first service to the terminal, which may include a partial configuration of a communication configuration used when the terminal performs the first service with the network device. For example, the terminal needs to use a second configuration to perform a communicate of the first service, and the first configuration of the first service sent by the network device is different from the second configuration. For example, the first configuration lacks one or more configuration parameters compared to the second configuration. Based on this, it is helpful to save the overhead for the network device to send the configuration to the terminal. The network device may determine the second configuration based on the received first configuration to perform the communication of the first service. In an example, the second configuration may include a full configuration used when the terminal performs the first service with the network device, or the second configuration may include a partial configuration used when the terminal performs the first service with the network device.

According to an embodiment of the present disclosure, the network device may determine the reference configuration according to the configuration of the second service stored in the terminal, and further determine the second configuration in combination with the reference configuration and the first configuration, thereby ensuring smooth communication of the first service using the second configuration.

It should be noted that the method for determining the reference configuration includes but is not limited to determining the reference configuration according to the stored configuration of the second service, and the reference configuration may also be determined by other method(s). For example, the reference configuration may be determined in a configuration determined autonomously by the terminal. In this case, the configuration determined autonomously by the terminal may be determined according to information reported by the terminal, or the configuration determined autonomously by the terminal may be determined according to a specification or a predefined rule.

FIG. 6B is a schematic flowchart of another configuration determination method according to an embodiment of the present disclosure. As shown in FIG. 6B, the method further includes:
In step S603, the terminal is indicated to determine the reference configuration according to the configuration of the second service, or the reference configuration is determined based on the configuration of the second service according to a specification.

It should be noted that the embodiment shown in FIG. 6B may be implemented independently, or may be implemented in combination with one or more embodiments of other embodiments of the present disclosure. The present disclosure does not limit the specific implementation.

In an embodiment, the network device may indicate the terminal to determine the reference configuration according to the configuration of the second service, and the terminal may determine the reference configuration according to the configuration of the second service based on the indication of the network device only. For example, the network device may indicate the terminal to determine a target service as the second service among multiple services, and indicate the terminal that a target configuration in the configuration of the second service is the second configuration.

**In** an embodiment, the network device may determine the reference configuration according to the configuration of the second service based on the specification, and correspondingly, the terminal may determine the reference configuration according to the configuration of the second service based on the specification only. For example, the network device and the terminal may determine a target service as the second service among multiple services according to the specification, and determine a target configuration in the configuration of the second service as the second configuration according to the specification.

**In** an embodiment, the network device may only indicate the terminal to determine a target service as the second service among multiple services, and the terminal may determine the target service as the second service among multiple services according to the indication of the network device, and further determine a target configuration in the configuration as the second configuration according to the specification. Based on the determined second service, the target configuration in the configuration of the second service may be determined to be the second configuration. Alternatively, the network device may only indicate the terminal to determine the target configuration in the configuration as the second configuration, and the terminal may first determine a target service as the second service among multiple services according to the specification, and further determine the target configuration in the configuration as the second configuration according to the indication of the network device. Based on the determined second service, the target configuration in the configuration of the second service may be determined to be the second configuration.

**In** an embodiment, the network device may indicate information such as the identity, status, type of a service, etc., and the terminal may determine the target service among multiple services according to the information such as the identity, status, type of the service, etc. indicated by the network device. For example, among multiple services, a service whose type is the same as the type indicated by the network device is determined as the target service. The network device may indicate information such as the identity, status, parameter, of a configuration, etc., and the terminal may determine the target configuration in the configuration of the second service according to the information such as the identity, status, parameter of the service, etc. indicated by the network device. For example, in the configuration of the second service, a configuration containing a parameter that is the same as the parameter indicated by the network device is determined as the target configuration.

In an embodiment, the protocol may stipulate information such as the identity, status, type of a service, etc., and the terminal may determine the target service among multiple services according to the information such as the identity, status, type of the service, etc., stipulated in the protocol. For example, among multiple services, a service whose type is the same as the type stipulated in the protocol may be determined as the target service. The protocol may stipulate information such as identity, status, parameter of a configuration, etc., and the terminal may determine the target configuration in the configuration of the second service according to the information such as the identity, status, parameter of the service, etc., stipulated in the protocol. For example, in the configuration of the second service, a configuration containing a parameter that is the same as the parameter stipulated in the protocol may be determined as the target configuration.

In an embodiment, the manner in which the network device indicates the terminal includes, but is not limited to, at least one of: indicating through indication signaling; or indicating through a broadcast message.

The indication signaling includes but is not limited to radio resource control RRC layer signaling, physical layer signaling (such as Downlink Control Information, DCI), media access control layer signaling (such as media access and control layer control element MAC CE).

The broadcast message includes but is not limited to a System Information Block (SIB), a multicast service control channel (MCCH), or a paging message, or the like.

FIG. 7 is a schematic flowchart of another configuration determination method according to an embodiment of the present disclosure. As shown in FIG. 7, determining the reference configuration according to the configuration of the second service stored in the terminal includes:

In step S701, in a case where the first configuration satisfies a first condition, the reference configuration is determined according to the configuration of the second service.

It should be noted that the embodiment shown in FIG. 7 may be implemented independently, or may be implemented in combination with one or more embodiments of other embodiments of the present disclosure. The present disclosure does not limit the specific implementation.

In an embodiment, after the network device sends the first configuration of the first service to the terminal, the network device may first determine whether the first configuration satisfies the first condition, and the network device may determine the reference configuration according to the configuration of the second service only if the first condition is satisfied; otherwise, there is no need to determine the reference configuration according to the configuration of the second service. For example, when the first configuration does not satisfy the first condition, the first configuration may be directly used for the communication of the first service.

The first condition is illustratively described below through several embodiments.

In an embodiment, the first condition includes at least one of:
a first indication being sent to the terminal, wherein the first indication is used to indicate that the first configuration is configured to the terminal in an incremental configuration manner; or
when a first configuration parameter is absent in the first configuration.

In an embodiment, the first condition may be that a first indication is sent to the terminal. The first indication is used to indicate that the first configuration is configured to the terminal in an incremental configuration manner. When the network device configures the first configuration for the terminal in the incremental configuration manner, the reference configuration may be determined according to the configuration of the second service stored in the terminal (that is, the configuration previously configured to the terminal by the network device).

When the first configuration is configured to the terminal in the incremental configuration manner, the first configuration lacks fields corresponding to one or more configuration parameters relative to a full configuration.

For example, the full configuration contains 4 configuration parameters, the first configuration contains 3 configuration parameters, and the first configuration lacks a field corresponding to the third parameter relative to the full configuration. For example, among the 4 configuration parameters, the first configuration parameter corresponds to a field A, the second parameter corresponds to a field B, the third parameter corresponds to a field C, and the fourth parameter corresponds to a field D. The full configuration contains fields ABCD, and the first configuration contains fields ABD.

The network device may indicate to the terminal through the first indication whether the first configuration is configured to the terminal in the incremental configuration manner, for example, by indicating in an explicit manner or in an implicit manner, which is not limited by the present disclosure. In addition, whether the first configuration is configured to the terminal the incremental configuration manner may also be determined based on a specification.

In an embodiment, the first condition may be that a part of configuration parameter(s) in the first configuration is(are) absent, where the first configuration parameter is not included in the first configuration, or a value of the first configuration parameter in the first configuration is a preset value. When the network device sends to the terminal the first configuration with a part of parameter(s) being absent, the reference configuration may be determined according to the configuration of the second service stored in the terminal.

A first configuration parameter being absent in the first configuration may include a case where the first configuration is configured to the terminal in an incremental configuration manner. That is, the first configuration does not lack field(s) corresponding to one or more configuration parameters relative to the full configuration. Alternatively, the first configuration parameter being absent in the first configuration means that: bit(s) in the field(s) corresponding to one or more configuration parameters is(are) set to a preset value (for example, all the bit(s) is(are) set to 1 or all the bit(s) is(are) set to 0) in the first configuration relative to the full configuration, and in this case the one or more configuration parameters are absent.

For example, the full configuration includes 4 configuration parameters, the first configuration includes 3 configuration parameters, and the first configuration lacks the third parameter relative to the full configuration. For example, among the 4 configuration parameters, the first configuration parameter corresponds to a field A, the second parameter corresponds to a field B, the third parameter corresponds to a field C, and the fourth parameter corresponds to a field D. The full configuration includes fields ABCD, and the first configuration also includes fields ABCD, but in the fields ABCD included in the first configuration, the bit(s) in the field C is(are) set to a preset value.

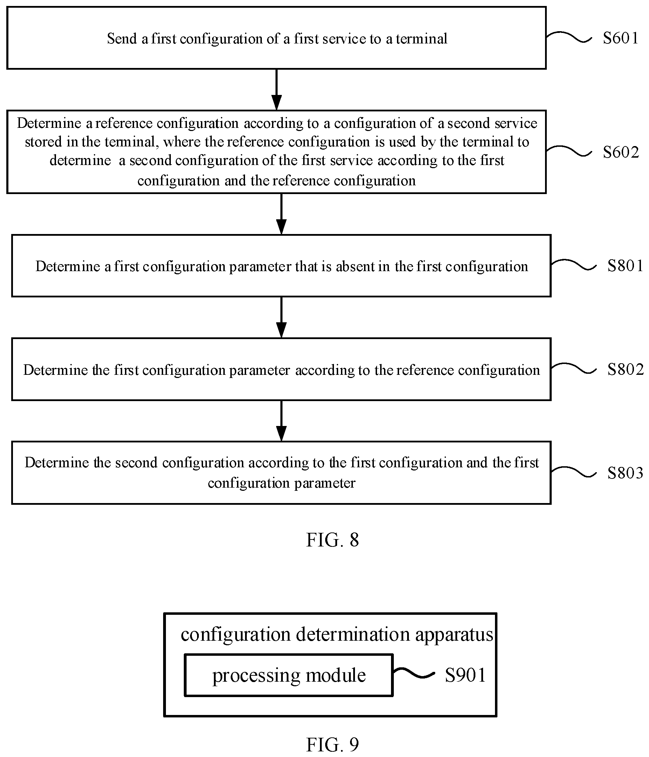

FIG. 8 is a schematic flowchart of another configuration determination method according to an embodiment of the present disclosure. As shown in FIG. 8, the method further includes:
In step S801, a first configuration parameter that is absent in the first configuration is determined.
In step S802, the first configuration parameter is determined according to the reference configuration.
In step S803, the second configuration is determined according to the first configuration and the first configuration parameter.

It should be noted that the embodiment shown in FIG. 8 may be implemented independently, or may be implemented in combination with one or more embodiments of other embodiments of the present disclosure. The present disclosure does not limit the specific implementation.

In an embodiment, in a case where the network device determines that the first configuration satisfies the first condition, the network device may determine the first configuration parameter that is absent in the first configuration, further determine the first configuration parameter according to the reference configuration, and further determine the second configuration according to the first configuration and the first configuration parameter.

The full configuration including 4 configuration parameters is still used as an example.

In a case where the network device determines that the first configuration is configured in the incremental configuration manner, for example, the first configuration includes fields ABD and the first configuration lacks the field C relative to the full configuration, it may be determined that the first configuration parameter that is absent in the first configuration is the configuration parameter corresponding to the field C. Accordingly, the configuration parameter corresponding to the field C in the reference configuration may be determined as the part of parameter(s) that is(are) absent in the first configuration, and further the second configuration may be determined based on the first configuration and the configuration parameter corresponding to field C determined in the reference configuration.

In a case where the network device determines that a part of configuration parameter(s) in the first configuration is(are) absent, for example, the first configuration includes fields ABCD and the bit(s) in field C is(are) set to a preset value, it may be determined that the first configuration parameter that is absent in the first configuration is the configuration parameter corresponding to the field C. Accordingly, the configuration parameter corresponding to the field C in the reference configuration may be determined as a part of parameter(s) that is(are) absent in the first configuration, and further the second configuration may be determined according to the first configuration and the configuration parameter corresponding to the field C determined in the reference configuration.

In an embodiment, the first service is a first multicast service, and/or the second service is a second multicast service.

The first service may be a first multicast service, and the second service may be a second multicast service. The first multicast service and the second multicast service may be the same multicast service, or may be different multicast services.

Multicast services mainly include two types: a multicast service for an inactive state and a multicast service for a connected state. The multicast service for the inactive state is a multicast service that supports a terminal in the inactive state to perform multicast service reception, and the multicast service for the connected state is a multicast service that supports a terminal in the connected state to perform multicast service reception. Based on these two types, the first multicast service and the second multicast service are illustratively described below.

In an embodiment, the first multicast service is a multicast service for the inactive state, and the second multicast service is a multicast service for the connected state. A first configuration of the first multicast service may be a multicast service configuration for the inactive state sent through at least one of: radio resource control release RRCRelease signaling (e.g., RRCRelease signaling carrying a suspended configuration), radio resource control reconfiguration RRCReconfiguration signaling, at least one piece of signaling (e.g., RRCResume signaling) in response to a radio resource control resume RRCResume request, a SIB, or MCCH. A configuration of the second multicast service may be a multicast service configuration for the connected state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH.

Alternatively, the first multicast service is a first multicast service for the inactive state, and the second multicast service is a second multicast service for the inactive state. A first configuration of the first multicast service may be a multicast service configuration for the inactive state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH. The configuration of the second multicast service may be a multicast service configuration for the inactive state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH.

Alternatively, the first multicast service is a multicast service for the connected state, and the second multicast service is a multicast service for the inactive state. A first configuration of the first multicast service may be a multicast service configuration for the connected state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH. A configuration of the second multicast service may be a multicast service configuration for the inactive state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (for example, RRCRelease signaling carrying a suspended configuration), a SIB, or MCCH.

The first multicast service is a first multicast service for the connected state, and the second multicast service is a second multicast service for the connected state. A first configuration of the first multicast service may be a multicast service configuration for the connected sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. A configuration of the second multicast service may be a multicast service configuration for the connected state sent through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH.

In an embodiment, in a case where the first multicast service is a multicast service for the inactive state and the second multicast service is a multicast service for the connected state, the network device may send the first configuration of the first multicast service to the terminal. Since the network device has sent the configuration of the second multicast service to the terminal, the terminal has stored the configuration of the second multicast service, and thus the reference configuration may be determined according to the configuration of the second multicast service.

For example, before the terminal is released to the inactive state, the network device may send the configuration of the second multicast service to the terminal for storage through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. Subsequently, when the terminal is released from the connected state to the inactive state, the network device may send the first configuration of the first multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and determine the reference configuration according to the configuration of the second multicast service. For example, when the terminal is released from the connected state to the inactive state, the network device may send the first configuration of the first multicast service to the terminal through RRCRelease signaling.

In an embodiment, in a case where the first multicast service is a first multicast service for the inactive state and the second multicast service is a second multicast service for the inactive state, the network device may send the first configuration of the first multicast service to the terminal when the terminal is in the inactive state. Since the terminal has stored the configuration of the second multicast service, the reference configuration may be determined according to the configuration of the second multicast service.

For example, when the terminal is in the connected state, the network device may send the configuration of the second multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. For example, when the terminal is in the inactive state, the network device may send the configuration of the second multicast service to the terminal through at least one of: a SIB or MCCH. Subsequently, the network device may send the first configuration of the first multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and determine the reference configuration according to the configuration of the second multicast service. For example, when the terminal is in the inactive state, the network device may send the first configuration of the first multicast service to the terminal through at least one of: a SIB, or MCCH.

In an embodiment, when the first multicast service is a multicast service for the connected state and the second multicast service is a multicast service for an inactive state, the network device may provide the first configuration of the first multicast service to the terminal when the terminal enters the connected state from the inactive state. Before entering the connected state, the terminal has stored the configuration of the second multicast service, and thus the reference configuration may be determined according to the configuration of the second multicast service.

For example, when the terminal is in the connected state, the network device may send the configuration of the second multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. The network device may subsequently send the first configuration of the first multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and determine the reference configuration according to the configuration of the second multicast service. For example, when the terminal enters the connected state from the inactive state, the network device may send the first configuration of the first multicast service to the terminal through RRCResume signaling.

In an embodiment, in a case where the first multicast service is a multicast service for the connected state and the second multicast service is a multicast service for the connected state, the network device may send the first configuration of the first multicast service to the terminal when the terminal is in the connected state. Since the terminal has stored the configuration of the second multicast service, the reference configuration may be determined based on the configuration of the second multicast service.

For example, when the terminal is in the connected state, the network device may send the configuration of the second multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH. For example, when the terminal is in the inactive state, the network device may send the configuration of the second multicast service to the terminal through at least one of: a SIB, or MCCH. Subsequently, the network device may send the first configuration of the first multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH, and determine the reference configuration according to the configuration of the second multicast service. For example, when the terminal is in the connected state, the network device may send the first configuration of the first multicast service to the terminal through at least one of: at least one piece of signaling (e.g., RRCResume signaling) in response to a radio resource control resume RRCResume request, radio resource control reconfiguration RRCReconfiguration signaling, radio resource control release RRCRelease signaling (e.g., RRCRelease signaling carrying a suspended configuration), a SIB, or MCCH.

In an embodiment, at least one of the configuration of the multicast service for the inactive state, the configuration of the first multicast service for the inactive state, or the configuration of the second multicast service for the inactive state is carried in at least one of the following information: dedicated signaling; or a broadcast message.

The dedicated signaling includes at least one of:
radio resource control reconfiguration (RRCReconfiguration) signaling; at least one piece of signaling in response to a radio resource control resume (RRCResume) request, for example, RRCResume signaling; or radio resource control release (RRCRelease) signaling, for example, RRCRelease signaling carrying a suspend configuration.

The broadcast message includes at least one of: a system information block, a multicast service control channel, or a paging message, etc.

In an embodiment, the first configuration of the first multicast service and the configuration of the second multicast service are carried in different messages.

For example, the first configuration of the first multicast service is carried in a first configuration message, and the configuration of the second multicast service is carried in the first configuration message sent to the terminal last time. In this case, if the first configuration of the first multicast service satisfies the first condition, the network device determines the reference configuration by default in a configuration carried in the first configuration message sent to the terminal last time.

In an embodiment, the first configuration of the first multicast service and the configuration of the second multicast service are carried in different messages.

For example, the first configuration of the first multicast service is carried in a first configuration message, and the configuration of the second multicast service is carried in a second configuration message. The first configuration message is different from the second configuration message. For example, the first and second configuration messages are of different types. For example, the first configuration message is RRCrelease signaling carrying a suspend configuration, and the second configuration message is RRCReconfiguration. In this case, the network device does not determine by default the reference configuration in the configuration carried by the first configuration message sent to the terminal last time. In this embodiment, the reference configuration may be determined according to the configuration of the second multicast service by indicating to the terminal or based on a specification, thereby ensuring the smooth determination of the reference configuration.

In an embodiment, the configuration of the second multicast service includes at least one of:
a multicast service configuration associated with a first bandwidth part, for example, a Common Frequency Resource (CFR) configuration;
a multicast service configuration associated with a first cell; in an example, the first cell is a cell supporting and/or used for performing a multicast service;
a multicast service configuration associated with a first bandwidth part in the first cell; or
a multicast service configuration associated with a first bandwidth part in a first cell group; in an example, the first cell group is a cell group supporting and/or used for performing a multicast service.

In an embodiment, after the network device sends the first configuration of the first service to the terminal, the network device may determine the reference configuration according to the multicast service configuration associated with the first BWP stored in the terminal.

In an embodiment, after the network device sends the first configuration of the first service to the terminal, the network device may determine the reference configuration according to the multicast service configuration associated with the first cell stored in the terminal.

In an embodiment, after the network device sends the first configuration of the first service to the terminal, the network device may determine the reference configuration according to the multicast service configuration associated with the first bandwidth part in the first cell stored in the terminal.

In an embodiment, after the network device sends the first configuration of the first service to the terminal, the network device may determine a reference configuration according to the multicast service configuration associated with the first bandwidth part in the first cell group stored in the terminal.

In an embodiment, the first bandwidth part includes at least one of:
an initial bandwidth part of the terminal;
a bandwidth part which the terminal currently camps on, for example, a BWP which the terminal camps on when the first configuration of the first service is received; or
any bandwidth part configured to the terminal.

In an embodiment, after the network device sends the first configuration of the first service to the terminal, the network device may determine the reference configuration according to the multicast service configuration associated with the initial BWP of the terminal stored in the terminal.

In an embodiment, after the network device sends the first configuration of the first service to the terminal, the network device may determine the reference configuration according to the multicast service configuration which is associated with the BWP which the terminal currently camps on and is stored in the terminal.

In an embodiment, after the network device sends the first configuration of the first service to the terminal, the network device may determine the reference configuration according to the multicast service configuration which is associated with any BWP configured for the terminal and is stored in the terminal.

In an embodiment, the cell includes at least one of:
a cell that belongs to the same service area as the cell which the terminal currently camps on;
a cell that belongs to the same service configuration area as the cell which the terminal currently camps on;
the cell which the terminal currently camps on, for example, the cell which the terminal camps on when the first configuration of the first service is received; or
any cell configured for the terminal.

In an embodiment, after the network device sends the first configuration of the first service to the terminal, the network device may determine the reference configuration according to the multicast service configuration which is associated with the cell belonging to the same service area as the cell which the terminal currently camps on and is stored in the terminal.

In an embodiment, after the network device sends the first configuration of the first service to the terminal, the network device may determine the reference configuration according to the multicast service configuration which is associated with the cell belonging to the same service configuration area as the cell which the terminal currently camps on and is stored in the terminal.

In an embodiment, after the network device sends the first configuration of the first service to the terminal, the network device may determine the reference configuration according to the multicast service configuration which is associated with the cell which the terminal currently camps on and is stored in the terminal.

In an embodiment, after the network device sends the first configuration of the first service to the terminal, the network device may determine the reference configuration according to the multicast service configuration which is associated with any cell configured for the terminal and is stored in the terminal.

In an embodiment, after the network device sends the first configuration of the first service to the terminal, the network device may determine the reference configuration according to the multicast service configuration which is associated with the first bandwidth part in the cell belonging to the same service area as the cell which the terminal currently camps on and is stored in the terminal.

In an embodiment, after the network device sends the first configuration of the first service to the terminal, the network device may determine the reference configuration according to the multicast service configuration which is associated with the first bandwidth part in the cell belonging to the same service configuration area as the cell which the terminal currently camps on and is stored in the terminal.

In an embodiment, after the network device sends the first configuration of the first service to the terminal, the network device may determine the reference configuration according to the multicast service configuration which is associated with the first bandwidth part in the cell which the terminal currently camps on and is stored in the terminal.

In an embodiment, after the network device sends the first configuration of the first service to the terminal, the network device may determine the reference configuration according to the multicast service configuration which is associated with the first bandwidth part in any cell configured for the terminal and is stored in the terminal.

In an embodiment, the cell group includes at least one of:
a cell group belonging to the same service area as a cell group to which the cell which the terminal currently camps on belongs;
a cell group belonging to the same service configuration area as the cell group to which the cell which the terminal currently camps on belongs;
the cell group to which the cell which the terminal currently camps on belongs; or
any cell group configured for the terminal.

In an embodiment, after the network device sends the first configuration of the first service to the terminal, the network device may determine the reference configuration according to the multicast service configuration which is associated with the first bandwidth part in the cell group belonging to the same service area as the cell group to which the cell which the terminal currently camps on belongs and the multicast service configuration is stored in the terminal.

In an embodiment, after the network device sends the first configuration of the first service to the terminal, the network device may determine the reference configuration according to the multicast service configuration which is associated with the first bandwidth part in the cell group belonging to the same service configuration area as the cell group to which the cell which the terminal currently camps on belongs and is stored in the terminal.

In an embodiment, after the network device sends the first configuration of the first service to the terminal, the network device may determine the reference configuration according to the multicast service configuration which is associated with the first bandwidth part in the cell group to which the cell which the terminal currently camps on belongs and is stored in the terminal.

In an embodiment, after the network device sends the first configuration of the first service to the terminal, the network device may determine the reference configuration according to the multicast service configuration which is associated with the first bandwidth part in any cell group configured for the terminal and is stored in the terminal.

Corresponding to the aforementioned embodiments of the configuration determination methods, the present disclosure also provides embodiments of configuration determination apparatuses.

FIG. 9 is a schematic block diagram of a configuration determination apparatus according to an embodiment of the present disclosure. As shown in FIG. 9, the configuration determination apparatus includes:
a processing module 901 configured to, in response to receiving a first configuration of a first service, determine a reference configuration according to a stored configuration of a second service;
wherein the reference configuration is used by the terminal to determine a second configuration of the first service according to the first configuration and the reference configuration.

In an embodiment, the processing module is configured to, in response to receiving the first configuration of the first service, determine, according to an indication of the network device and/or a specification, the reference configuration according to the configuration of the second service.

In an embodiment, the processing module is configured to, in response to receiving the first configuration of the first service and the first configuration satisfying a first condition, determine the reference configuration according to the configuration of the second service.

In an embodiment, the first condition includes at least one of:
the first configuration being configured to the terminal in an incremental configuration manner; or
when a first configuration parameter is absent in the first configuration.

In an embodiment, the processing module is further configured to: determine the first configuration parameter that is absent in the first configuration; determine the first configuration parameter according to the reference configuration; and determine the second configuration according to the first configuration and the first configuration parameter.

In an embodiment, the first service is a first multicast service, and/or the second service is a second multicast service.

In an embodiment, the first multicast service is a multicast service for an inactive state, and the second multicast service is a multicast service for a connected state; or, the first multicast service is a first multicast service for the inactive state, and the second multicast service is a second multicast service for the inactive state; or, the first multicast service is a multicast service for the connected state, and the second multicast service is a multicast service for the inactive state; or, the first multicast service is a first multicast service for the connected state, and the second multicast service is a second multicast service for the connected state.

In an embodiment, at least one of a configuration of the multicast service for the inactive state, a configuration of the first multicast service for the inactive state, or a configuration of the second multicast service for the inactive state is carried in at least one of the following information: dedicated signaling; or a broadcast message.

In an embodiment, the first configuration of the first multicast service and the configuration of the second multicast service are carried in different messages.

In an embodiment, the configuration of the second multicast service includes at least one of: a multicast service configuration associated with a first bandwidth part; a multicast service configuration associated with a first cell; a multicast service configuration associated with a first bandwidth part in the first cell; or a multicast service configuration associated with a first bandwidth part in a first cell group.

In an embodiment, the first bandwidth part includes at least one of: an initial bandwidth part; a currently camped-on bandwidth part; or any bandwidth part configured by the network device.

In an embodiment, the cell includes at least one of: a cell belonging to the same service area as the currently camped-on cell; a cell belonging to the same service configuration area as the currently camped-on cell; the currently camped-on cell; or any cell configured by the network device.

In an embodiment, the cell group includes at least one of: a cell group belonging to the same service area as a cell group to which the currently camped-on cell belongs; a cell group belonging to the same service configuration area as the cell group to which the currently camped-on cell belongs; the cell group to which the currently camped-on cell belongs; or any cell group configured by the network device.

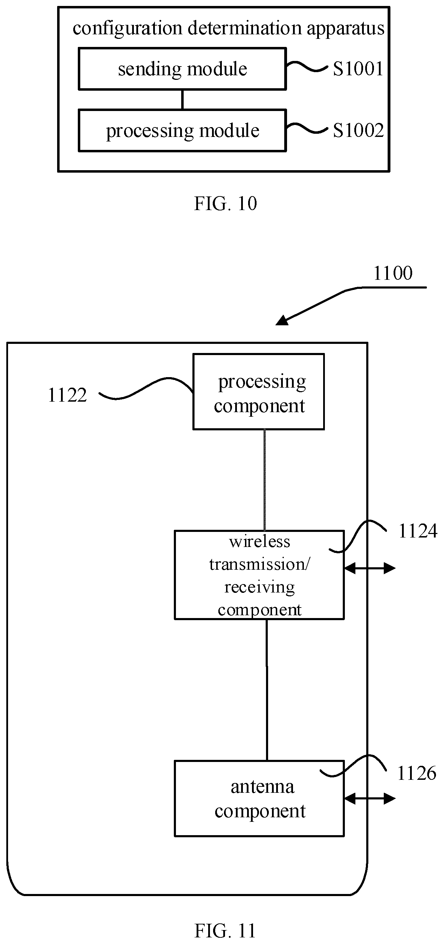

FIG. 10 is a schematic block diagram of a configuration determination apparatus according to an embodiment of the present disclosure. As shown in FIG. 10, the configuration determination apparatus includes:
a sending module 1001 configured to send a first configuration of a first service to a terminal;
a processing module 1002 configured to determine a reference configuration according to a configuration of a second service stored in the terminal; wherein the reference configuration is used by the terminal to determine a second configuration of the first service according to the first configuration and the reference configuration.

In an embodiment, the sending module is configured to indicate the terminal to determine the reference configuration according to the configuration of the second service, or the processing module is configured to determine the reference configuration according to the configuration of the second service according to a specification.

In an embodiment, the processing module is configured to determine the reference configuration according to the configuration of the second service in a case where the first configuration satisfies a first condition.

In an embodiment, the first condition includes at least one of: the first configuration being configured to the terminal in an incremental configuration manner; or when a first configuration parameter is absent in the first configuration.

In an embodiment, the processing module is further configured to determine a first configuration parameter that is absent in the first configuration; determine the first configuration parameter according to the reference configuration; and determine the second configuration according to the first configuration and the first configuration parameter.

In an embodiment, the first service is a first multicast service, and/or the second service is a second multicast service. In an embodiment, the first multicast service is a multicast service for the inactive state, and the second multicast service is a multicast service for the connected state; or, the first multicast service is a first multicast service for the inactive state, and the second multicast service is a second multicast service for the inactive state; or, the first multicast service is a multicast service for the connected state, and the second multicast service is a multicast service for the inactive state; or, the first multicast service is a first multicast service for the connected state, and the second multicast service is a second multicast service for the connected state.

In an embodiment, at least one of a configuration of the multicast service for the inactive state, a configuration of the first multicast service for the inactive state, or a configuration of the second multicast service for the inactive state is carried in at least one of the following information: dedicated signaling; or a broadcast message.

In an embodiment, the first configuration of the first multicast service and the configuration of the second multicast service are carried in different messages.

In an embodiment, the configuration of the second multicast service includes at least one of: a multicast service configuration associated with a first bandwidth part; a multicast service configuration associated with a first cell; a multicast service configuration associated with a first bandwidth part in the first cell; or a multicast service configuration associated with a first bandwidth part in a first cell group.

In an embodiment, the first bandwidth part includes at least one of: an initial bandwidth part of the terminal; a bandwidth part which the terminal currently camps on; or any bandwidth part configured for the terminal.

In an embodiment, the cell includes at least one of: a cell belonging to the same service area as a cell which the terminal currently camps on; a cell belonging to the same service configuration area as the cell which the terminal currently camps on; the cell which the terminal currently camps on; or any cell configured for the terminal.

In an embodiment, the cell group includes at least one of: a cell group belonging to the same service area as a cell group to which the cell which the terminal currently camps on belongs; a cell group belonging to the same service configuration area as the cell group to which the cell which the terminal currently camps on belongs; the cell group to which the cell which the terminal currently camps on belongs; or any cell group configured for the terminal.

For the apparatus embodiments, since they basically correspond to the method embodiments, reference may be made to a part of descriptions of the method embodiments for relevant parts. The apparatus embodiment described above are only illustrative, wherein modules described as separate components may or may not be physically separated, and the components displayed as modules may or may not be physical modules, that is, they may be located in one place, or they may be distributed on multiple network modules. A part or all of the modules may be selected according to actual needs to achieve the purpose(s) of the solutions of the embodiments. Those of ordinary skill in this art can understand and implement the solutions without paying creative work.

An embodiment of the present disclosure further proposes a configuration determination system, including a terminal and a network device. The terminal is configured to implement the configuration determination method performed by the terminal as described in any of the above embodiments, and the network device is configured to implement the configuration determination method performed by the network device as described in any of the above embodiments.

An embodiment of the present disclosure further proposes a communication apparatus, including: a processor; and a memory configured to store a computer program; wherein when the computer program is executed by the processor, the configuration determination method performed by the terminal as described in any one of the above embodiments is implemented.

An embodiment of the present disclosure further proposes a communication apparatus, including: a processor; and a memory configured to store a computer program; wherein when the computer program is executed by the processor, the configuration determination method performed by the network device as described in any one of the above embodiments is implemented.

An embodiment of the present disclosure further provides a computer-readable storage medium for storing a computer program. When the computer program is executed by a processor, the configuration determination method performed by a terminal as described in any one of the above embodiments is implemented.

An embodiment of the present disclosure further provides a computer-readable storage medium for storing a computer program. When the computer program is executed by a processor, the configuration determination method performed by the network device as described in any one of the above embodiments is implemented.

As shown in FIG. 11, FIG. 11 is a schematic block diagram of an apparatus 1100 for configuration determination according to an embodiment of the present disclosure. The apparatus 1100 may be a base station. Referring to FIG. 11, the apparatus 1100 includes a processing component 1122, a wireless transmission/reception component 1124, an antenna component 1126, and a signal processing part specific to a wireless interface, and the processing component 1122 may further include one or more processors. One of the processors in the processing component 1122 may be configured to implement the configuration determination method performed by a network device as described in any one of the above embodiments.

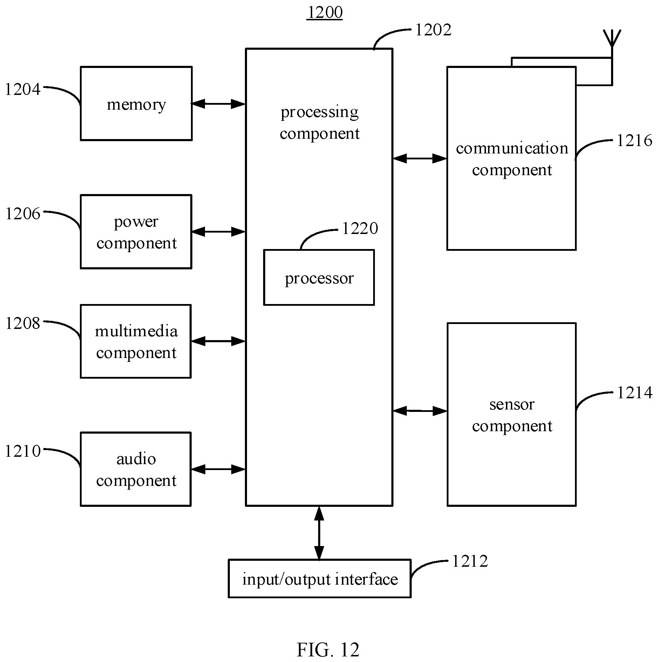

FIG. 12 is a schematic block diagram of an apparatus 1200 for configuration determination according to an example embodiment. For example, the apparatus 1200 may be a terminal, such as a mobile phone, a computer, digital broadcast user equipment, a messaging device, a gaming console, a tablet, a medical device, exercise equipment, a personal digital assistant, and the like.

Referring to FIG. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to implement all or part of the steps in the above described configuration determination method performed by a terminal in any one of the above embodiments. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200.

The communication component 1216 is configured to facilitate communication, wired or wirelessly, between the apparatus 1200 and other devices. The apparatus 1200 can access a wireless network based on a communication standard, such as WiFi, 2G, 3G, 4G LTE, or 5G NR, or a combination thereof. In one example embodiment, the communication component 1216 receives a broadcast signal or broadcast associated information from an external broadcast management system via a broadcast channel. In one example embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described configuration determination method performed by a terminal in any one of the embodiments.

In example embodiments, there is also provided a non-transitory computer-readable storage medium including instructions, such as the memory 1204 including instructions executable by the processor 1220 in the apparatus 1200, for performing the above-described configuration determination method performed by a terminal in any one of the embodiments. For example, the non-transitory computer-readable storage medium may be a ROM, a Random Access Memory (RAM), a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A configuration determination method, wherein the method is performed by a terminal, and the method comprises:
in response to receiving a first configuration of a first service, determining a reference configuration according to a stored configuration of a second service;
wherein the reference configuration is used by the terminal to determine a second configuration of the first service according to the first configuration and the reference configuration.

2. The method according to claim 1, wherein determining the reference configuration according to the stored configuration of the second service in response to receiving the first configuration of the first service, comprises:
in response to receiving the first configuration of the first service, determining the reference configuration according to an indication of a network device and/or a specification, and the configuration of the second service.

3. The method according to claim 1 or 2, wherein determining the reference configuration according to the stored configuration of the second service in response to the first configuration of the first service comprises:
in response to receiving the first configuration of the first service and the first configuration satisfying a first condition, determining the reference configuration according to the configuration of the second service.

4. The method according to claim 3, wherein the first condition comprises at least one of:
a first indication being received, wherein the first indication is used to indicate that the first configuration is configured to the terminal in an incremental configuration manner; or
when a first configuration parameter is absent in the first configuration.

5. The method according to claim 3 or 4, further comprising:
determining a first configuration parameter that is absent in the first configuration;
determining the first configuration parameter according to the reference configuration; and
determining the second configuration according to the first configuration and the first configuration parameter.

6. The method according to any one of claims 1 to 5, wherein the first service is a first multicast service, and/or the second service is a second multicast service.

7. The method according to claim 6, wherein:
the first multicast service is a multicast service for an inactive state, and the second multicast service is a multicast service for a connected state; or
the first multicast service is a first multicast service for the inactive state, and the second multicast service is a second multicast service for the inactive state; or
the first multicast service is a multicast service for the connected state, and the second multicast service is a multicast service for the inactive state; or
the first multicast service is a first multicast service for the connected state, and the second multicast service is a second multicast service for the connected state.

8. The method according to claim 7, wherein at least one of a configuration of the multicast service for the inactive state, a configuration of the first multicast service for the inactive state, or a configuration of the second multicast service for the inactive state is carried in at least one of the following information:
dedicated signaling; or
a broadcast message.

9. The method according to claim 8, wherein the dedicated signaling comprises at least one of:
at least one piece of signaling in response to a radio resource control resume request;
radio resource control reconfiguration signaling; or
radio resource control release signaling;
and/or, wherein the broadcast message comprises at least one of:
a system information block; or
a multicast service control channel.

10. The method according to any one of claims 6 to 9, wherein a first configuration of the first multicast service and a configuration of the second multicast service are carried in different messages.

11. The method according to any one of claims 6 to 9, wherein a configuration of the second multicast service comprises at least one of:
a multicast service configuration associated with a first bandwidth part;
a multicast service configuration associated with a first cell;
a multicast service configuration associated with a first bandwidth part in a first cell; or
a multicast service configuration associated with a first bandwidth part in a first cell group.

12. The method according to claim 11, wherein the first bandwidth part comprises at least one of:
an initial bandwidth part;
a currently camped-on bandwidth part; or
any bandwidth part configured by a network device.

13. The method according to claim 11 or 12, wherein the cell comprises at least one of:
a cell that belongs to a same service area as a currently camped-on cell;
a cell that belongs to a same service configuration area as the currently camped-on cell;
the currently camped-on cell; or
any cell configured by a network device.

14. The method according to any one of claims 11 to 13, wherein the cell group comprises at least one of:
a cell group that belongs to a same service area as a cell group to which a currently camped-on cell belongs;
a cell group that belongs to a same service configuration area as the cell group to which the currently camped-on cell belongs;
the cell group to which the currently camped-on cell belongs; or
any cell group configured by a network device.

15. A configuration determination method, wherein the method is performed by a network device, and the method comprising:
sending a first configuration of a first service to a terminal; and
determining a reference configuration according to a configuration of a second service stored in the terminal;
wherein the reference configuration is used by the terminal to determine a second configuration of the first service according to the first configuration and the reference configuration.

16. The method according to claim 15, further comprising:
indicating the terminal to determine the reference configuration according to the configuration of the second service, or determining the reference configuration according to the configuration of the second service according to a specification.

17. The method according to claim 15 or 16, wherein determining the reference configuration according to the configuration of the second service stored in the terminal comprises:
in a case where the first configuration satisfies a first condition, determining the reference configuration according to the configuration of the second service.

18. The method according to claim 7, wherein the first condition comprises at least one of:
a first indication being sent to the terminal, wherein the first indication is used to indicate that the first configuration is configured to the terminal in an incremental configuration manner; or
when a first configuration parameter is absent in the first configuration.

19. The method according to claim 17 or 18, further comprising:
determining a first configuration parameter that is absent in the first configuration;
determining the first configuration parameter according to the reference configuration; and
determining the second configuration according to the first configuration and the first configuration parameter.

20. The method according to any one of claims 15 to 19, wherein the first service is a first multicast service, and/or the second service is a second multicast service.

21. The method according to claim 20, wherein:
the first multicast service is a multicast service for an inactive state, and the second multicast service is a multicast service for a connected state; or
the first multicast service is a first multicast service for the inactive state, and the second multicast service is a second multicast service for the inactive state; or
the first multicast service is a multicast service for the connected state, and the second multicast service is a multicast service for the inactive state; or
the first multicast service is a first multicast service for the connected state, and the second multicast service is a second multicast service for the connected state.

22. The method according to claim 21, wherein at least one of a configuration of the multicast service for the inactive state, a configuration of the first multicast service for the inactive state, or a configuration of the second multicast service for the inactive state is carried in at least one of the following information:
dedicated signaling; or
a broadcast message.

23. The method according to claim 22, wherein the dedicated signaling comprises at least one of:
at least one piece of signaling in response to a radio resource control resume request;
radio resource control reconfiguration signaling; or
radio resource control release signaling;
and/or, wherein the broadcast message comprises at least one of:
a system information block; or
a multicast service control channel.

24. The method according to any one of claims 20 to 23, wherein a first configuration of the first multicast service and a configuration of the second multicast service are carried in different messages.

25. The method according to any one of claims 20 to 23, wherein the configuration of the second multicast service comprises at least one of:
a multicast service configuration associated with a first bandwidth part;
a multicast service configuration associated with a first cell;
a multicast service configuration associated with a first bandwidth part in a first cell; or
a multicast service configuration associated with a first bandwidth part in a first cell group.

26. The method according to claim 25, wherein the first bandwidth part comprises at least one of:
an initial bandwidth part of the terminal;
a bandwidth part which the terminal currently camps on; or
any bandwidth part configured to the terminal.

27. The method according to claim 25 or 26, wherein the cell comprises at least one of:
a cell that belongs to a same service area as a cell which the terminal currently camps on;
a cell that belongs to a same service configuration area as the cell which the terminal currently camps on;
the cell which the terminal currently camps on; or
any cell configured for the terminal.

28. The method according to any one of claims 25 to 27, wherein the cell group comprises at least one of:
a cell group that belongs to a same service area as a cell group to which a cell which the terminal currently camps on belongs;
a cell group that belongs to a same service configuration area as the cell group to which the cell which the terminal currently camps on belongs;
the cell group to which the cell which the terminal currently camps on belongs; or
any cell group configured for the terminal.

29. A configuration determination apparatus, comprising:
a processing module configured to, in response to receiving a first configuration of a first service, determine a reference configuration according to a stored configuration of a second service;
wherein the reference configuration is used by the terminal to determine a second configuration of the first service according to the first configuration and the reference configuration.

30. A configuration determination apparatus, comprising:
a sending module configured to send a first configuration of a first service to a terminal; and
a processing module configured to determine a reference configuration according to a configuration of a second service stored in the terminal;
wherein the reference configuration is used by the terminal to determine a second configuration of the first service according to the first configuration and the reference configuration.

31. A configuration determination system, comprising a terminal and a network device, wherein the terminal is configured to implement the configuration determination method according to any one of claims 1 to 14, and the network device is configured to implement the configuration determination method according to any one of claims 15 to 28.

32. A communication apparatus, comprising:
a processor; and
a memory configured to store a computer program;
wherein when the computer program is executed by the processor, the configuration determination method according to any one of claims 1 to 14 is implemented.

33. A communication apparatus, comprising:
a processor; and
a memory configured to store a computer program;
wherein when the computer program is executed by the processor, the configuration determination method according to any one of claims 15 to 28 is implemented.

34. A computer-readable storage medium for storing a computer program, wherein when the computer program is executed by a processor, the configuration determination method according to any one of claims 1 to 14 is implemented.

35. A computer-readable storage medium for storing a computer program, wherein when the computer program is executed by a processor, the configuration determination method according to any one of claims 15 to 28 is implemented.
